# FASCICULE DE BREVET EUROPEEN

(11) **EP 0 536 714 B1**
(45) Date de publication et mention de la délivrance du brevet: **24.05.1995**
(21) Numéro de dépôt: 92117110.4
(22) Date de dépôt: 07.10.1992
(51) Int. Cl.: A47J 31/40, B65G 65/48, G01F 13/00

(54) **Distributeur automatique de mouture**
Automatische Dosiervorrichtung für Mahlgut
Automatic distributor for milling products

(30) Priorité: 09.10.1991 FR 9112437
(43) Date de publication de la demande: 14.04.1993
(73) Titulaire: MOULINEX, F-93170 Bagnolet (FR)
(72) Inventeur: Parise, Vital André, F-14052 Caen Cédex (FR); Nielsen, Henrik Jul, F-14052 Caen Cédex (FR)
(74) Mandataire: May, Hans Ulrich, Dr.

(56) Documents cités:
- CH-A- 457 279
- DE-C- 899 477
- FR-A- 2 256 094
- FR-A- 2 653 110
- US-A- 3 305 139
- US-A- 3 587 938

## Description

L'invention se rapporté à des distributeurs automatiques de mouture comportant un réservoir d'axe transversal XX' contenant une quantité de mouture et comprenant un fond circulaire, une paroi latérale cylindrique avec une fente réalisée à proximité du fond du réservoir, un couvercle circulaire fermant ledit réservoir, et un répartiteur de mouture placé dans le fond du réservoir, comprenant un disque comportant une face inférieure et une face supérieure, positionné sur un arbre d'axe XX', entraîné en rotation autour dudit axe par un groupe moteur, ainsi qu'au moins une pale curviligne, et déversant, dans une chambre d'une machine positionnée au-dessous du réservoir, une quantité déterminée de mouture qui est issue du réservoir par la fente. Un tel distributeur est connu de document US-A-3 587 938.

L'invention concerne, plus particulièrement, un distributeur automatique de mouture équipant une machine à café automatique et permettant, après sélection d'un circuit de commande, de déverser dans la chambre à infusion un volume désiré par l'utilisateur pour l'obtention d'un café à dosage déterminé.

Il existe des distributeurs de mouture sur des machines à café automatiques mais ces distributeurs ne permettent d'obtenir ni un dosage précis de la quantité de café, ni un réglage optimum de la concentration du café, ni un bon écoulement de la mouture du café. D'autre part, ces distributeurs de mouture sont complexes dans leur montage et leur mécanisme. Le document US-A-3 587 938, par exemple, décrit un dispositif de distribution d'insecticide en poudre dans lequel un distributeur comporte plusieurs pales élastiquement déformables fixées à un moyeu rotatif tournant au fond d'un réservoir sans définir de jeu périphérique avec la paroi interne du réservoir. Une ouverture latérale permettant le passage de l'insecticide est prévue à la base du réservoir. Lors du fonctionnement de ce dispositif, les pales entraînées en rotation par le moyeu rotatif se déforment, peu avant d'arriver à proximité de l'ouverture latérale, emmagasinant ainsi provisoirement une certaine quantité d'énergie libérée au moment où les pales, arrivant en regard de l'ouverture latérale, retrouvent leur forme initiale et expulsent ainsi le produit hors du réservoir. Ce type d'expulsion ne permet cependant pas un dosage précis du produit à délivrer.

L'invention a pour but de remédier aux inconvénients précités en mettant en oeuvre un distributeur automatique de mouture simple, fiable et peu coûteux.

Selon l'invention, la pale curviligne est placée sur la face inférieure du disque et présente une extrémité antérieure située à distance de la paroi latérale cylindrique du réservoir et une extrémité postérieure qui se situe au-delà de la périphérie du disque sous un jeu périphérique laissé entre ladite périphérie du disque et la paroi latérale cylindrique interne du réservoir, un moyen d'écoulement constitué par un tronc de cône est agencé au-dessus du disque et laisse libre ledit jeu périphérique de manière à minimiser la pression sur la mouture qui se trouve en dessous du disque.

Grâce au distributeur de mouture selon l'invention, on comprendra que la rotation d'un certain nombre de tours du disque permet d'obtenir un dosage précis de mouture. Le nombre de pales et surtout la taille de la fente permettent aussi d'obtenir la concentration de la boisson à préparer et demandée par l'utilisateur. D'autre part, un nombre limité de pièces constituant le distributeur de mouture facilite le démontage et le nettoyage dudit distributeur de mouture. Enfin, le distributeur de mouture est utilisable avec des moutures de granulométrie différente ainsi qu'avec des moutures de nature différente, par exemple mouture de café. D'autres caractéristiques préférentielles sont contenues dans les revendications dépendentes.

Les caractéristiques et avantages de l'invention ressortiront d'ailleurs de la description qui va suivre, à titre d'exemple non limitatif, en référence aux dessins annexés dans lesquels :
La figure 1 représente schématiquement un distributeur de mouture selon l'invention monté sur une machine à café automatique ;
La figure 2 représente en vue agrandie et en coupe verticale le distributeur automatique de mouture ;
La figure 3 représente une coupe horizontale selon la ligne A-A de la figure 2 du distributeur automatique de mouture selon l'invention.

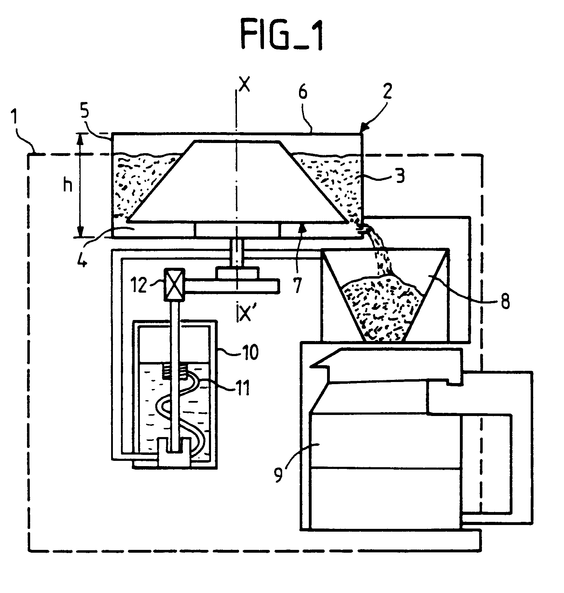

Selon la figure 1, une machine à café automatique 1 comporte, entre autres, un réservoir 2 d'axe transversal XX' contenant une quantité de mouture 3 de café et comprenant un fond circulaire 4, une paroi latérale cylindrique 5 de hauteur h et un couvercle circulaire 6 fermant ledit réservoir 2, un répartiteur de mouture 7 placé sur le fond 4 du réservoir et déversant une quantité déterminée de mouture 3 de café issue du réservoir 2 dans une chambre à infusion 8 positionnée au dessous du réservoir 2 et au dessus d'un récipient récupérateur 9 du liquide infusé. Le liquide servant à infuser la mouture est, par exemple, de l'eau et est contenu dans un réservoir de liquide 10 faisant partie intégrante de la machine à café automatique 1. Ledit réservoir 10 contient un dispositif de dosage 11 pour mesurer un volume de liquide nécessaire au remplissage d'un nombre "n" de tasses. Le dispositif de dosage 11 est réglé par un groupe moteur 12 subordonné à un circuit de commande (non représenté) et éjecte dans la chambre à infusion 8 un volume déterminé de liquide. Un tel dispositif de dosage 11 a été décrit dans la demande de brevet FR-A-2 653 110 déposée le 12.10.89 au nom de la demanderesse.

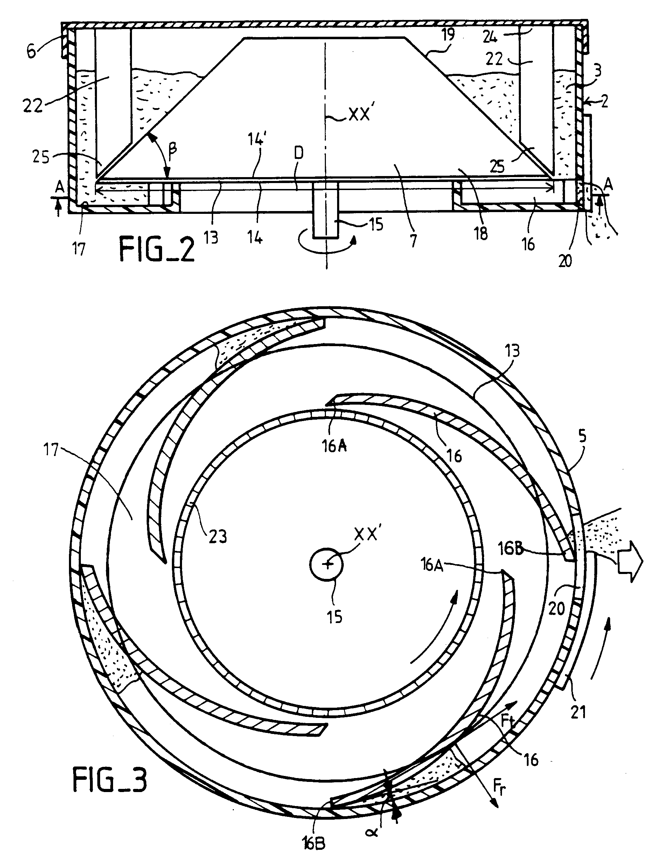

En référence à la figure 2, le répartiteur de mouture 7 selon l'invention comporte un disque 13 comprenant une face inférieure 14 et une face supérieure 14'. Le disque 13 est fixé sur un arbre 15 ayant pour axe, l'axe XX' du réservoir 2. Ledit arbre 15 est activé en rotation autour de l'axe XX', par exemple, par un groupe moteur subordonné à un circuit de commande. Ledit groupe moteur est, dans notre exemple particulier de réalisation, le groupe moteur 12 qui active le dispositif de dosage 11 du liquide. Des pales 16, par exemple en aluminium, sont fixées, en partie, sur la face inférieure 14 du disque 13. Chaque pale 16 a, par exemple, une forme curviligne et possède une extrémité antérieure 16 A située à distance de la paroi latérale cylindrique 5 et une extrémité postérieure 16 B qui s'étend au delà de la périphérie du disque 13 sous un jeu périphérique entre ladite périphérie du disque 13 et la paroi latérale 5 du réservoir 2 et qui est adjacente à ladite paroi latérale 5. Chacune des pâles 16 est positionnée dans un canal 17 positionné sur le fond du réservoir 2 et delimité par la paroi latérale 5 du réservoir 2 et une paroi cylindrique 23, par exemple, solidaire du réservoir 2. L'angle formé par l'extrémité postérieure 16 B et la paroi latérale cylindrique 5 est un angle α déterminé en fonction de la force radiale F_{R}. Cet angle α tient compte, d'une part, du coefficient de frottement entre la mouture de café et les pales qui doit être minimiser et, d'autre part, du coefficient de frottement entre la mouture de café et la paroi latérale du réservoir 2 qui doit être maximiser. L'angle α est, par exemple, sensiblement égal à 10°. Dans l'exemple de réalisation décrit, le disque 3 supporte 4 pales. Ce nombre est nullement limitatif, le disque 3 possédant au minimum une pale 16. Le disque 3 du distributeur de mouture 7 a un diamètre D sensiblement inférieur au diamètre du réservoir 2. Le jeu périphérique entre la périphérie du disque 3 et la paroi latérale du réservoir 2 est déterminé pour obtenir un débit d'écoulement constant de la mouture dans la chambre d'infusion 8, et pour permettre à la mouture de café de tomber au fond du réservoir. Ledit jeu est sensiblement égale à 7,5 mm. Le disque 3 supporte sur sa face supérieure 14' un moyen d'écoulement 18 minimisant la pression sur la mouture au fond du réservoir 2 assurant ainsi un débit constant au cours du fonctionnement. Ce moyen d'écoulement 18 est un tronc de cône 19 fixé, par exemple, par soudage sur le disque 3. La base du tronc de cône 19 a, par exemple, le même diamètre que le disque 3 pour les mêmes raisons que celles évoquées précédemment. Le tronc de cône 19 possède un angle de base β dont la valeur est déterminée de manière que la mouture de café ne reste pas collée sur les parois du tronc de cône 19. L'angle de base β est, par exemple, sensiblement égal à 50°.

Selon la figure 3, le distributeur de mouture comporte également une fente 20 réalisée sur la paroi latérale du réservoir 2 et positionnée à proximité du fond 4 dudit réservoir 2. La fente 20 a, par exemple, une forme rectangulaire et la hauteur de ladite fente 20 est sensiblement égale à la hauteur des pales 16. La fente 20 présente une ouverture réglable, par exemple, par une porte coulissante 21 commandée par un moyen de commande non représenté qui peut être manuel, électromécanique ou électronique. Le réglage de l'ouverture permet de régler le débit de mouture de café, c'est à dire, la force du café.

Le couvercle circulaire 6 possède des palettes 22 positionnées parallèlement à l'axe XX' sur la face inférieure dudit couvercle 6 et s'étendant vers le bas jusqu'à proximité du disque 13. Le nombre de palettes 22 est, par exemple, trois, ce nombre étant nullement limitatif mais étant déterminé pour éviter que la mouture tourne avec le disque et le tronc de cône. Les palettes 22 comportent chacune une extrémité 24 fixée audit couvercle 6 par exemple par moulage et une extrémité libre 25 dont la forme épouse la pente du tronc de cône 19 pour éviter tout frottement.

Dans un autre mode de réalisation non représenté, le disque et le tronc de cône peuvent être réalisés en une seule pièce en matière plastique ce qui minimise le nombre de pièces constituant le distributeur de mouture facilitant ainsi le démontage et le nettoyage dudit appareil.

En fonctionnement, le réservoir 2 est rempli de mouture.

L'utilisateur programme sur un circuit de commande les paramètres concernant le dosage et la force du café. En effet, le circuit de commande déclenchant le fonctionnement du moteur 12, ce dernier agit, d'une part, sur le dispositif de dosage 11 du liquide suivant le nombre "n" de tasses et, d'autre part, sur le disque 3 supportant les pales 16 dont la rotation d'un nombre déterminé de tour fixe le dosage du café. Le disque 3 et le tronc de cône 19 qui lui est rattaché sont entraînés en rotation. La mouture de café qui est attirée au fond du réservoir 2 est poussée par les pales 16 suivant les force F_{R} et F_{T}. La fente 20 qui a été ouverte d'une largeur déterminée laisse échapper ainsi la mouture de café vers la chambre d'infusion 8.

Le distributeur de mouture s'applique sur les machines à café automatiques, mais un tel distributeur de mouture selon l'invention peut être monté sur des machines de distribution semi-automatique de boisson.

## Revendications

1. Distributeur automatique de mouture comportant un réservoir (2) d'axe transversal XX' contenant une quantité de mouture (3) et comprenant un fond circulaire (4), une paroi latérale cylindrique (5) avec une fente (20) réalisée à proximité du fond (4) du réservoir (2), un couvercle circulaire (6) fermant ledit réservoir (2), et un répartiteur de mouture (7) placé dans le fond du réservoir (2), comprenant un disque (13) comportant une face inférieure (14) et une face supérieure (14'), positionné sur un arbre (15) d'axe (XX'), entraîné en rotation autour dudit axe (XX') par un groupe moteur (12), ainsi qu'au moins une pale curviligne (16), et déversant, dans une chambre (8) d'une machine positionnée au-dessous du réservoir (2), une quantité déterminée de mouture qui est issue du réservoir (2) par la fente (20),
**caractérisé en ce que** la pale curviligne (16) est placée sur la face inférieure (14) du disque (13) et présente une extrémité antérieure (16 A) située à distance de la paroi latérale cylindrique (5) du réservoir (2) et une extrémité postérieure (16 B) qui se situe au-delà de la périphérie du disque (13) sous un jeu périphérique laissé entre ladite périphérie du disque et la paroi latérale cylindrique interne (5) du réservoir (2), et en ce qu'un moyen d'écoulement (18) constitué par un tronc de cône (19) est agencé au-dessus du disque (13) et laisse libre ledit jeu périphérique de manière à minimiser la pression sur la mouture (3) qui se trouve en dessous du disque (13).

2. Distributeur automatique de mouture selon la revendication 1,
**caractérisé en ce que** le tronc de cône (19) posséde un angle de base β voisin de 50° et est solidaire du disque (13).

3. Distributeur automatique de mouture selon la revendication 2,
**caractérisé en ce que** le disque (13) et le tronc de cône (19) constituent une seule pièce.

4. Distributeur automatique de mouture selon la revendication 1,
**caractérisé en ce que** le fond du réservoir (2) comporte un canal (17) delimité par la paroi latérale (5) et une paroi cylindrique (23), et dans lequel au moins la pale (16) est positionnée.

5. Distributeur automatique de mouture selon l'une quelconque des revendications précédentes,
**caractérisé en ce que** le disque (13) supporte quatre pales (16) de forme curviligne, et en ce que l'extrémité postérieure (16 B) et la paroi latérale cylindrique (5) ménagent un angle α voisin de 10°.

6. Distributeur automatique de mouture, selon l'une quelconque des revendications précédentes,
**caractérisé en ce que** la fente (20) comporte une porte coulissante (21) fixée sur la paroi latérale externe du réservoir (2) et réglée par un moyen de commande.

7. Distributeur automatique selon l'une quelconque des revendications précédentes,
**caractérisé en ce que** le couvercle (6) du réservoir (2) comporte trois palettes (22) positionnées parallèlement à l'axe XX' sur la face inférieure dudit couvercle (6) et s'étendant vers le bas jusqu'à proximité de la partie inférieure du tronc de cône (19).

8. Machine à café automatique (1) comportant un distributeur automatique selon l'une quelconque des revendications précédentes,
**caractérisée en ce qu'** elle comporte un réservoir d'eau (10) contenant un dispositif de dosage (11) d'eau pour mesurer un volume d'eau nécessaire au remplissage d'un nombre "n" de tasses, ledit dispositif de dosage (11) étant activé par le groupe moteur (12) subordonné à un circuit de commande et envoyant un volume d'eau déterminé dans une chambre à infusion (8).

## Claims

1. Automatic ground coffee distributor having a reservoir (2) with a transverse axis XX' containing a quantity of ground coffee (3) and comprising a circular base (4), a cylindrical lateral wall (5) with a slot (20) produced in proximity to the base (4) of the reservoir (2), a circular lid (6) closing off the said reservoir (2), and a ground coffee distributor (7) positioned in the base of the reservoir (2), comprising a disc (13) having a bottom face (14) and a top face (14'), positioned on a shaft (15) of axis (XX'), rotated about the said axis (XX') by a drive unit (12), and at least one curved blade (16), and pouring, into a chamber (8) of a machine positioned below the reservoir (2), a predetermined quantity of ground coffee which has come from the reservoir (2) through the slot (20), characterised in that the curved blade (16) is positioned on the bottom face (14) of the disc (13) and has a front end (16 A) situated at a distance from the cylindrical lateral wall (5) of the reservoir (2) and a rear end (16 B) which is situated beyond the periphery of the disc (13) under a peripheral clearance left between the said periphery of the disc and the internal cylindrical lateral wall (5) of the reservoir (2), and in that a flow means (18) formed by a truncated cone (19) is arranged above the disc (13) and leaves the said peripheral clearance clear so as to minimize the pressure on the ground coffee (3) which is beneath the disc (13).

2. Automatic ground coffee distributor according to Claim 1, characterised in that the truncated cone (19) has a base angle β of approximately 50° and is attached to the disc (13).

3. Automatic ground coffee distributor according to Claim 2, characterised in that the disc (13) and the truncated cone (19) form a single component.

4. Automatic ground coffee distributor according to Claim 1, characterised in that the base of the reservoir (2) has a channel (17) defined by the lateral wall (5) and a cylindrical wall (23), and in which at least the blade (16) is positioned.

5. Automatic ground coffee distributor according to any one of the preceding claims, characterised in that the disc (13) supports four blades (16) which are curved in shape, and in that the rear end (16 B) and the cylindrical lateral wall (5) form an angle α of approximately 10°.

6. Automatic ground coffee distributor according to any one of the preceding claims, characterised in that the slot (20), has a sliding door (21) fixed to the external lateral wall of the reservoir (2) and adjusted by a control means.

7. Automatic distributor according to any one of the preceding claims, characterised in that the lid (6) of the reservoir (2) has three paddles (22) positioned parallel to the axis XX' on the bottom face of the said lid (6) and extending downwards until they come close to the end of the lower part of the truncated cone (19).

8. Automatic coffee machine (1) having an automatic distributor according to any one of the preceding claims, characterised in that it has a water reservoir (10) containing a water apportioning device (11) to measure a volume of water necessary for filling a number "n" of cups, the said apportioning device (11) being actuated by the drive unit (12) under the control of a control circuit and sending a predetermined volume of water into an infusion chamber (8).

## Patentansprüche

1. Automatische Dosiervorrichtung für Mahlgut mit einem Behälter (2) mit einer Querachse XX', der eine Mahlgutmenge (3) enthält und einen kreisförmigen Boden (4), eine zylindrische Seitenwand (5) mit einem in der Nähe des Bodens (4) des Behälters (2) realisierten Spalt (20), einen kreisförmigen Deckel (6) zum Verschluß des Behälters (2) sowie einen im Boden des Behälters (2) angeordneten Mahlgutverteiler (7) aufweist, der eine an einer Welle (15) mit der Achse XX' positionierte Scheibe (13) mit einer Unterseite (14) und einer Oberseite (14') aufweist und durch eine Motoreinheit (12) um die Achse (XX') in Drehung angetrieben wird, sowie wenigstens ein gekrümmtes Blatt (16) aufweist und in eine Kammer (8) einer unter dem Behälter (2) positionierten Maschine eine vorbestimmte Menge des Mahlguts ausschüttet, die durch den Spalt (20) aus dem Behälter (2) abgegeben wird,
**dadurch gekennzeichnet**, daß das gekrümmte Blatt (16) an der Unterseite (14) der Scheibe (13) angeordnet ist und ein vorderes Ende (16A), das im Abstand von der zylindrischen Seitenwand (5) des Behälters (2) liegt, sowie ein hinteres Ende (16B) aufweist, das jenseits des Umfangs der Scheibe (13) mit einem Umfangsspiel liegt, das zwischen dem Umfang der Scheibe und der inneren zylindrischen Seitenwand (5) des Behälters (2) freigelassen ist, und daß ein durch einen Kegelstumpf (19) gebildetes Auslaufmittel (18) über der Scheibe (13) vorgesehen ist und das Umfangsspiel so freiläßt, daß der Druck auf das Mahlgut (3) minimiert wird, das sich unter der Scheibe (13) befindet.

2. Automatische Dosiervorrichtung für Mahlgut nach Anspruch 1,
**dadurch gekennzeichnet**, **daß** der Kegelstumpf (19) einen Basiswinkel β in der Nähe von 50° aufweist und mit der Scheibe (13) fest verbunden ist.

3. Automatische Dosiervorrichtung für Mahlgut nach Anspruch 2,
**dadurch gekennzeichnet, daß** die Scheibe (13) und der Kegelstumpf (19) ein einziges Teil bilden.

4. Automatische Dosiervorrichtung für Mahlgut nach Anspruch 1,
**dadurch gekennzeichnet, daß** der Boden des Behälters (2) einen Kanal (17) aufweist, der durch die Seitenwand (5) und eine zylindrische Wand (23) begrenzt ist und in dem wenigstens das Blatt (16) positioniert ist.

5. Automatische Dosiervorrichtung für Mahlgut nach einem der vorhergehenden Ansprüche,
**dadurch gekennzeichnet, daß** die Scheibe (13) vier Blätter (16) mit gekrümmter Form aufweist, und daß das hintere Ende (16B) und die zylindrische Seitenwand (5) einen Winkel α in der Nähe von 10° vorsehen.

6. Automatische Dosiervorrichtung für Mahlgut nach einem der vorhergehenden Ansprüche,
**dadurch gekennzeichnet, daß** der Spalt (20) eine Schiebetür (21) aufweist, die an der äußeren Seitenwand des Behälters (2) vorgesehen ist und durch ein Steuermittel geregelt wird.

7. Automatische Dosiervorrichtung nach einem der vorhergehenden Ansprüche,
**dadurch gekennzeichnet, daß** der Deckel (6) des Behälters (2) drei Flügel (22) besitzt, die parallel zu der Achse XX' an der Unterseite des Deckels (6) positioniert sind und sich nach unten bis in die Nähe des unteren Teils des Kegelstumpfs (19) erstrecken.

8. Automatische Kaffeemaschine (1) mit einer automatischen Dosiervorrichtung nach einem der vorhergehenden Ansprüche,
**dadurch gekennzeichnet, daß** sie einen Wasserbehälter (10) mit einer Wasserdosiereinrichtung (11) zum Abmessen eines Wasservolumens aufweist, das zum Füllen einer Anzahl "n" von Tassen erforderlich ist, wobei die Dosiereinrichtung (11) durch die einer Steuerschaltung untergeordnete Motoreinheit (12) aktiviert wird und ein bestimmtes Wasservolumen in eine Aufgußkammer (8) schickt.
